(19) **Europäisches Patentamt**
**European Patent Office**
**Office européen des brevets**

(11) **EP 1 991 010 B1**

(12) **EUROPEAN PATENT SPECIFICATION**

(45) Date of publication and mention
of the grant of the patent:
**14.08.2013 Bulletin 2013/33**

(51) Int Cl.:
*H04W 52/04* (2009.01)     *H04W 52/28* (2009.01)

(86) International application number:
**PCT/CN2007/000400**

(21) Application number: **07702284.6**

(22) Date of filing: **06.02.2007**

(87) International publication number:
**WO 2007/098675 (07.09.2007 Gazette 2007/36)**

(54) **METHOD FOR UPDATING THE POWER CONTROL PARAMETER AND THE TRANSMITTING POWER OF THE HIGH SPEED SHARE INFORMATION CHANNEL**

VERFAHREN ZUM AKTUALISIEREN DES LEISTUNGSREGELPARAMETERS UND DER SENDELEISTUNG DES SCHNELLEN SHARE-INFORMATIONSKANALS

PROCÉDÉ DE MISE À JOUR DU PARAMÈTRE DE COMMANDE DE PUISSANCE ET DE LA PUISSANCE DE TRANSMISSION DU CANAL D'INFORMATIONS DE PARTAGE À VITESSE ÉLEVÉE

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.02.2006 CN 200610058263**

(43) Date of publication of application:
**12.11.2008 Bulletin 2008/46**

(73) Proprietor: **ZTE Corporation**
**Guangdong 518057 (CN)**

(72) Inventors:
• **MA, ZijiangZTE Plaza, Keji Road South,**
**Shenzhen Guangdong 518057 (CN)**

• **ZHANG, Yincheng**
**Nanshan ,Guangdong 518057 (CN)**
• **MA, Zhifeng**
**Nanshan District; Guangdong 518057 (CN)**
• **ZHENG, Yongqiang**
**Shenzhen Guangdong 518057 (CN)**

(74) Representative: **Bergmeier, Werner et al**
**Canzler & Bergmeier**
**Friedrich-Ebert-Straße 84**
**85055 Ingolstadt (DE)**

(56) References cited:
**EP-A2- 1 422 887     WO-A1-03/088695**
**WO-A1-03/088695     WO-A1-2004/102828**
**CN-A- 1 512 802     CN-A- 1 536 905**
**US-A1- 2004 266 466**

**Description**

**Technical Field**

The present invention relates to the field of mobile communication technology, more specifically, to a method for updating power control parameter and transmission power of high speed shared information channel in a TD-CDMA (time division code division multiple access) system.

**Technical Background**

HSDPA (High Speed Downlink Packet Access) technology is a technology providing high speed downlink data traffic for multi-users. It adapts to the services of downloading a great deal of information, such as multimedia, Inter-net. HSDPA has introduced a new transmission channel, i.e. HS-DSCH (High Speed Downlink Shared Channel); users share downlink code resource and power resource for time division multiplexing. Such configuration is applicable to burst packet data traffic. Physical downlink channel HS-SCCH (High Speed Shared Control Channel) is used to carry physical layer control signaling for decoding on HS-PDSCH (High Speed Physical Downlink Shared Channel). UE (User Equipment) can find the HS-DSCH resource configured for it based on its designated physical layer information such as code channel, timeslot, modulation mode and the like through reading the information on the HS-SCCH; meanwhile, the UE feeds back the channel quality information (CQI), data block decoding information (Ack/Nack) and the like of the HS-DSCH channel to Node B through the HS-SICH (High Speed Shared Information Channel).

In accordance with 3GPP protocol, the HS-SCCH channel and the HS-SICH channel which are assigned by Node B to the UE appear in pairs, that is, Node B may assign 1~4 HS-SCCH physical channels to the UE, accordingly, it shall also assign 1~4 HS-SICH physical channels to the UE. All the HS-SCCHs which are assigned to one UE are referred to as a HS-SCCH set, accordingly there is a corresponding HS-SICH set. The UE can only use one HS-SCCH in the set and one corresponding HS-SICH at a TTI (Transmit Time interval).

WO 03 088695 A1 relates to a radio link parameter updating method for a high speed downlink packet access (HSDPA) system in a mobile communication system, in which a base station triggers updating of radio link parameter to an RNC to dynamically change a parameter of a radio link depending on a radio channel situation.

TDD (Time Division Duplex) system includes two systems of HCR TDD and LCR TDD, wherein HCR TDD is TDD with a high chip rate of 3.84Mcps; LCR TDD is TDD with a low chip rate of 1.28Mcps, i.e., TD-SCDMA. In both the two TDD systems, the HS-SICH transmitted from the UE (Mobile Terminal) to the Node B and the corresponding HS-SCCH transmitted from the Node B to the UE both need power control. In LCR TDD, the power control of the HS-SICH includes open loop power control and closed loop power control; in HCR TDD, the power control of the HS-SICH only refers to the open loop power control.

In both the two TDD modes, when a network side assigns the HS-DSCH resource for a certain UE based on the HS-DSCH resource condition of the network and the traffic demand of the UE, a high layer (RRC layer, Radio Resource Control layer) of the network side (including RNC and Node B, RNC: Radio Resource Controller) will send a high layer signaling to the UE; the high layer signaling includes an information element (IE) "HS-SCCH info", which includes HS-SICH power control parameter for configuring the open loop power control parameter, the closed loop power control parameter (only for LCR TDD) and the transmission power offset of HS-SICH for the UE.

The information element "HS-SCCH info", which includes the HS-SICH power control parameter, is only included in the message which is sent when the network side assigns the HS-DSCH resource for the UE, and is no longer included in the message which is then sent from the network side to the UE; so when the network side needs to update the HS-SICH power control parameter, the updated parameter of the HS-SICH power control is required to be included in other information sent to the UE. In 3GPP protocol, when the network side determines to update the parameters of uplink power control and time advance adjustment (only for HCR TDD) for the UE, the network side will send a message "UPLINK PHYSICAL CHANNEL CONTROL" (this message can also be used for other purposes, which will not be discussed in the present invention) to the UE. In the present invention, when the network side updates the HS-SICH power control parameter, the network side will need to send the "UPLINK PHYSICAL CHANNEL CONTROL" message to the UE.

It needs to be pointed out that although the present protocols teach that the message needs to be sent when updating the HS-SICH power control parameter, the parameters configured in the message are incomplete in the present protocols, and some HS-SICH power control parameters cannot be updated. Specifically, the disadvantages are as follows:

1) in the present 3GPP protocol, in the "UPLINK PHYSICAL CHANNEL CONTROL" message which is sent by the network side to the UE, the HS-SICH power control parameters, such as $PRX_{HS-SICH}$ (a expected value of HS-SICH) for the open loop power control and TPC Step Size (transmission power control step size) for the closed loop power control, are not configured for the LCR TDD mode. Thus, the network side cannot update the HS-SICH power control parameter in the LCR TDD system, then the UE cannot get the updated HS-SICH power control parameter, the new HS-SICH initial transmission power value cannot be recalculated, and the UE cannot adjust TCP Step Size of the closed loop power control.

2) In both HCR TDD and LCR TDD, the parameter of "Ack-Nack Power Offset (Transmission Power Offset)" is not configured in the "UPLINK PHYSICAL CHANNEL CONTROL" message which is sent by the network side to the UE, so the network side cannot update this parameter and the physical layer of the UE cannot adjust the offset of the HS-SICH transmission power.

## Summary of the Invention

The technical problem to be solved by the present invention is to provide a method for updating the power control parameter and transmission power of high speed shared information channel so as to realize timely and accurate update of the power control parameter and the transmission power of the high speed shared information channel in TDD system (including 3.84Mcps HCR TDD and 1.28Mcps LCR TDD).

To solve the above technical problem, the present invention provides a method for updating the power control parameter of the high speed shared information channel for time division duplex system with low chip rate, including the following steps of:

when a radio resource control layer on a network side determining to update the power control parameter of the high speed shared information channel configured for the user equipment, it sending a "UPLINK PHYSICAL CHANNEL CONTROL" message to the user equipment, the message including one or more of the following parameters: high speed shared information channel receiving power ($PRX_{HS-SICH}$) expected to be received by the user equipment, transmission power control step size (TPC step size) and transmission power offset (Ack-Nack power offset); and

the user equipment replacing the corresponding parameter which is originally stored according to the power control parameter in the received message.

Further, the method can also have the following characteristic: when the radio resource control layer determines to update the power control parameter of the high speed shared information channel configured for the user equipment, it is also the time when the radio resource control layer determines to update the power control parameter of the high speed shared information channel based on the quality of the high speed sheared channel, or when the radio resource control layer independently determines to update the power control parameter of the high speed shared information channel.

Further, the method can also have the following characteristic: in the step of the radio resource control layer determining to update the power control parameter of the high speed shared information channel configured for the user equipment,
when the radio resource control layer determines to update the open loop power control parameter of the high speed shared information channel, the "UPLINK PHYSICAL CHANNEL CONTROL" message sent to the user equipment includes the parameter of $PRX_{HS-SICH}$;
when the radio resource control layer determines to update the closed loop power control parameter of the high speed shared information channel, the "UPLINK PHYSICAL CHANNEL CONTROL" message sent to the user equipment includes the parameter of TPC step size;
when the radio resource control layer determines to update the transmission power offset of the high speed shared information channel, the "UPLINK PHYSICAL CHANNEL CONTROL" message sent to the user equipment includes the parameter of Ack-Nack Power Offset.

In order to solve the above technical problem, the present invention provides a method for updating the transmission power of the high speed shared information channel of the user equipment for the time division duplex system with low chip rate, including the following steps of:

when the radio resource control layer determining to update the power control parameter of the high speed shared information channel configured for the user equipment, it sending a "UPLINK PHYSICAL CHANNEL CONTROL" message to the user equipment, the message including one or more of the following parameters: high speed shared information channel receiving power ($PRX_{HS-SICH}$) expected to be received by the user equipment, transmission power control step size (TPC step size) and transmission power offset (Ack-Nack Power Offset);

the user equipment replacing the corresponding parameter which is originally stored according to the power control parameter in the received message; and

the user equipment recalculating the transmission power based on the updated power control parameter.

Further, the method can also have the following characteristic:

when the radio resource control layer determines to update the open loop power control parameter of the high speed shared information channel, the "UPLINK PHYSICAL CHANNEL CONTROL" message includes $PRX_{HS-SICH}$, the user equipment replaces the corresponding parameter which is originally stored according to the $PRX_{HS-SICH}$ in the received message, the updated parameter is $PRX'_{HS-SICH}$, and the user equipment calculates the initial transmission power of the HS-SICH by using the following formula:

$$P_{HS-SICH} = PRX'_{HS-SICH} + L_{PCCPCH}$$

wherein, $L_{PCCPCH}$ represents the measuring compensation value of the user equipment, which is a parameter stored by the user equipment;

when the radio resource control layer determines to update the closed loop power control parameter of the high speed shared information channel, the "UPLINK PHYSICAL CHANNEL CONTROL" message includes TPC step size, the user equipment replaces the corresponding parameter which is originally stored according to the TPC step size in the received message, the updated parameter is TPC step size', and the user equipment calculates the closed loop transmission power of the HS-SICH by using the following formula:

$$P_{HS-SICH} = P_{HS-SICH}' + TPC \text{ step size'}(TPC)$$

wherein, $P_{HS-SICH}'$ is the power value of UE transmitting HS-SICH last time, TPC is the TPC value carried on the HS-SCCH received by the user equipment; when TPC is "UP", the power of the UE transmitting the HS-SICH this time is $P_{HS-SICH} = P_{HS-SICH}' + TPC$ step size; when TPC is "DOWN", the power of the UE transmitting the HS-SICH this time is $P_{HS-SICH} = P_{HS-SICH}' - TPC$ step size;

when the radio resource control layer determines to update the transmission power offset of the high speed shared information channel, the "UPLINK PHYSICAL CHANNEL CONTROL" message includes Ack-Nack Power Offset, the physical layer of the user equipment employs the updated Ack-Nack Power Offset as the offset of the transmission power of the HS-SICH, the updated parameter is Ack-Nack Power Offset', and the transmission power of the HS-SICH is adjusted finally by the following formula:

$$P_{HS-SICH} = P_{HS-SICH} + \text{Ack-Nack Power Offset'}.$$

In order to solve the above technical problem, the present invention provides a method for updating the power control parameter of the high speed shared information channel for the time division duplex system with high chip rate, including the following steps of:

When the radio resource control layer determining to update the power control parameter of the high speed shared information channel configured for the user equipment, it sending a "UPLINK PHYSICAL CHANNEL CONTROL" message to the user equipment, the message including one or more of the following parameters: power control information element of the high speed shared information channel HS-SICH Power Control Info and transmission power offset Ack-Nack Power Offset; and

the user equipment replacing the corresponding parameter which is originally stored according to the power control parameter in the received message.

Further, the method can also have the following characteristic: when the radio resource control layer determines to update the power control parameter of the high speed shared information channel configured for the user equipment, it is also the time when the radio resource control layer determines to update the power control parameter of the high speed shared information channel based on the quality of the high speed sheared channel, or when the radio resource control layer independently determines to update the power control parameter of the high speed shared information channel.

Further, the method can also have the following characteristic: in the step of the radio resource control layer determining to update the power control parameter of the high speed shared information channel configured for the user equipment,

when the radio resource control layer determines to update the open loop power control parameter of the high speed shared information channel, the "UPLINK PHYSICAL CHANNEL CONTROL" message sent to the user equipment includes the parameter of HS-SICH Power Control Info;

when the radio resource control layer determines to update the transmission power offset of the high speed shared information channel, the "UPLINK PHYSICAL CHANNEL CONTROL" message sent to the user equipment includes the parameter of Ack-Nack Power Offset.

To solve the technical problem described above, the present invention provides a method for updating the transmission power of the high speed shared information channel of the user equipment for the time division duplex system with high chip rate, including the following steps of:

when the radio resource control layer determining to update the power control parameter of the high speed shared information channel configured for the user equipment, it sending a "UPLINK PHYSICAL CHANNEL CONTROL" message to the user equipment, the message including one or more of the following parameters: power control information element of the high speed shared information channel HS-SICH Power Control Info and transmission power offset Ack-Nack Power Offset;

the user equipment replacing the corresponding parameter which is originally stored according to the power control parameter in the received message; and

the user equipment recalculating the transmission power based on the updated power control parameter.

Further, the method can also have the following characteristic:

when the radio resource control layer determines to update the open loop power control parameter of the high speed shared information channel, the "UPLINK PHYSICAL CHANNEL CONTROL" message includes HS-SICH Power Control Info, the HS-SICH Power Control Info includes target signal to interference ratio $SIR_{TARGET}$ and HS-SICH Constant value; the user equipment replaces the corresponding parameter which is originally stored according to the $SIR_{TAR-GET}$ and HS-SICH Constant value in the received message; the updated parameters are $SIR'_{TARGET}$ and HS-SICH Constant value'; the user equipment calculates the initial transmission power of the HS-SICH by using the following formula:

$$P_{HS\text{-}SICH}=\alpha L_{PCCPCH}+(1-\alpha)L_0+I_{BTS}+SIR'_{TARGET}+HS\text{-}SICH \text{ Constant value'},$$

wherein, the parameters stored in the user equipment are:

$L_{PCCPCH}$: measuring compensation value of the user equipment;

$L_0$: long-term average value of path loss;

$\alpha$: weight parameter;

$I_{BTS}$: interference signal power at a receiver at base station;

when the radio resource control layer determines to update the transmission power offset of the high speed shared information channel, the "UPLINK PHYSICAL CHANNEL CONTROL" message includes Ack-Nack Power Offset; the physical layer of the user equipment employs the updated Ack-Nack Power Offset as the offset of the transmission power of the HS-SICH; the updated parameter is Ack-Nack Power Offset'; and the transmission power of the HS-SICH is adjusted finally by the following formula:

$$P_{HS\text{-}SICH}= P_{HS\text{-}SICH}+ Ack\text{-}Nack \text{ power offset'}.$$

By using the method provided by the present invention, the network side realizes the timely and accurate update of the power control parameter of the HS-SICH in TDD system (including time division duplex system with low chip rate and time division duplex system with high chip rate), so that the user equipment can get the correctly updated power control parameter and update the transmission power timely based on the updated power control parameter.

## Brief Description of the Drawings

**Fig.1** is a flowchart of updating the power control parameter of the high speed shared information channel in LCR TDD system;

**Fig.2** is a schematic view of updating and calculating the HS-SICH transmission power in LCR TDD system after the UE receiving the HS-SICH power control parameter in the "UPLINK PHYSICAL CHANNEL CONTROL" message;

**Fig.3** is a flowchart of updating the power control parameter of the high speed shared information channel in HCR TDD system;

**Fig.4** is a schematic view of updating and calculating the HS-SICH transmission power in HCR TDD system after the UE receiving the HS-SICH power control parameter in the "UPLINK PHYSICAL CHANNEL CONTROL" message.

## Preferred Embodiments of the Invention

In prior arts, in both of the two TDD modes (including LCR TDD and HCR TDD), when the network side assigns HS-DSCH resource for a certain UE (user equipment) based on the HS-DSCH resource condition of the network and the traffic demand of the UE, the high layer (RRC layer, Radio Resource Control layer) of the network side (including RNC and Node B, RNC: Radio Resource Controller) will send a high layer signaling to the UE; the high layer signaling includes an information element (IE) "HS-SCCH info", which includes HS-SICH power control parameter for configuring open loop power control parameter, closed loop power control parameter (only for LCR TDD) and transmission power offset of HS-SICH for the UE.

For HCR TDD, the configured power control-related parameters (only the open loop power control) of the HS-SICH in the information element (IE) "HS-SCCH info" include: Ack-Nack Power Offset (transmission power offset) and HS-SICH Power Control Info, wherein HS-SICH Power Control Info includes two parameters: UL target SIR (uplink target signal to interference ratio) and HS-SICH Constant value, as shown in the following table:

HS-SICH Power Control Info

The information element is used for sending HS-SICH power control information to the UE only for TDD of 3.84 Mcps.

| Information Element/Group name | Need | Multi | Type and reference | Semantics description | Version |
|---|---|---|---|---|---|
| UL target SIR | MP | | Real (-11..20 by step of 0.5) | dB | REL-5 |
| HS-SICH Constant value | MP | | Constant value TDD 10.3.6.11a | | REL-5 |

For LCR TDD, the configured power control-related parameters of HS-SICH in "HS-SCCH info" include the open loop power control parameter "PRX$_{HS-SICH}$" (a expected value of HS-SICH), the closed loop power control parameter "TPC step size" (transmit power control step size) and the parameter "Ack-Nack Power Offset" (transmission power offset) for both the open loop and the closed loop.

The initial transmission power of HS-SICH calculated by the UE is used for the open loop power control. According to 3GPP protocol, the parameters and calculation formulas of the open loop power control of HS-SICH for the two TDD systems are different, the details as follows:

In the LCR TDD system, the formula by which the UE calculates the initial transmission power of HS-SICH is:

$$P_{HS-SICH} = PRX_{HS-SICH} + L_{PCCPCH} \qquad \text{(formula 1)}$$

wherein

$P_{HS-SICH}$: transmission power value (dBm);

$PRX_{HS-SICH}$: HS-SICH receiving power desired to be received by the UE, of which the UE is informed by the high layer through the information element in the RRC protocol;

$L_{PCCPCH}$: measuring compensation value of the UE, which the UE can get by reading the information element "Primary CCPCH Tx Power" in the message block 5 or 6 of the system, or of which the UE is informed by the high layer through the information element "Uplink DPCH Power Control info" in the RRC protocol;

In HCR TDD system, the formula by which the UE calculates the initial transmission power of HS-SICH is:

$$P_{HS-SICH} = \alpha L_{PCCPCH} + (1-\alpha)L_0 + I_{BTS} + SIR_{TARGET} + HS\text{-}SICH \text{ Constant value} \qquad \text{(formula 2)}$$

wherein

$L_0$: long-term average value of path loss;

$\alpha$: weight parameter;

$I_{BTS}$: power of interference signal at a receiver of base station;

$SIR_{TARGET}$: UL target SIR (uplink target signal to interference ratio), of which the UE is informed by the high layer through the information element "HS-SICH Power Control info" in the RRC protocol;

HS-SICH Constant value: it is assigned with value by the high layer through the information element "HS-SICH Constant value" in the RRC protocol.

In LCR TDD, the process of the open loop power control of the HS-SICH carried out by the UE is applied to the power value by which the UE initially transmits the HS-SICH; subsequently, when the UE receives the subsequent HS-SCCH sent from Node B, which carries the parameter TPC (transmit power control) of the closed loop power control of related HS-SICH, the UE will begin the process of closed loop power control of HS-SICH; until the moment or the period of time when the UE cannot receive the fed back HS-SICH correctly, the UE will recommence the process of the open loop power control of HS-SICH. In the LCR TDD system, when the UE is in the process of closed loop power control of HS-SICH, the formula by which the UE calculates the transmission power of HS-SICH is:

$$P_{HS-SICH} = P_{HS-SICH}' + TPC \text{ step size (TPC)} \qquad \text{(formula 3)}$$

wherein

$P_{HS-SICH}'$: the power value by which the UE transmits the HS-SICH last time;

TPC step size: the TPC adjustment step size parameter which is configured for the UE by the network side via the high layer signaling, the step size is 1, 2 or 3.

TPC: the TPC value carried on HS-SCCH which is received by the UE; when TPC is "UP", the power by which the UE transmits HS-SICH this time is $P_{HS-SICH} = P_{HS-SICH}' + TPC$ step size (increasing the transmission power); when TPC is "DOWN", the power by which the UE transmits HS-SICH this time is $P_{HS-SICH} = P_{HS-SICH}' - TPC$ step size (decreasing the transmission power);

In both the HCR TDD system and the LCR TDD system, when the UE transmits the HS-SICH power practically, the high layer of the UE firstly obtains the transmission power value of the HS-SICH according to the computing formulas (formula 1, formula 2 or formula 3) of the open loop or closed loop (only for LCR TDD) power control; then, the physical layer of the UE uses the parameter "Ack-Nack Power Offset" for the power offset of the HS-SICH transmission power as the power value by which the UE transmits the HS-SICH finally.

In other words, when the uplink HS-SICH channel fed back by the UE to the network side carries the ACK information (when the UE can process the information in HS-PDSCH correctly, the UE will feed back ACK (correct) information on the HS-SICH channel), the UE will increase the actual transmission power value of HS-SICH in order to ensure that the network side can receive HS-SICH correctly and reliably; this task is accomplished by the physical layer of the UE. When the UE transmits the HS-SICH power value practically, if the UE feeds back the ACK information on the HS-SICH, the physical layer of the UE will add the HS-SICH power value calculated by the high layer of the UE with the Ack-Nack power offset.

Thus, through the processing of the power offset by the physical layer of the UE, when the UE feeds back the ACK information on the HS-SICH, the HS-SICH power actually transmitted by the UE is:

$$P_{HS\text{-}SICH} = P_{HS\text{-}SICH} + \text{Ack-Nack Power Offset} \qquad \text{(formula 4)}$$

Wherein,

$P_{HS\text{-}SICH}$ in the right of the formula is the transmission power of the HS-SICH calculated by the high layer of the UE;

$P_{HS\text{-}SICH}$ in the left of the formula is the actual transmission power after added by the HS-SICH power offset (processed by the physical layer of the UE).

The present invention provides the method for updating the power control parameter of the high speed shared information channel for the LCR TDD system and HCR TDD system respectively. The method will be described-below in detail:

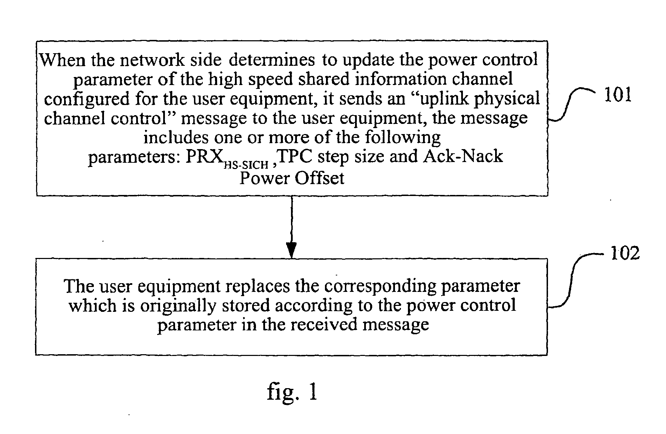

As shown in Fig.1, the method for updating the power control parameter of the high speed shared information channel for the time division duplex system with low chip rate includes the following steps of:

Step 101: when the network side determing to update the power control parameter of the high speed shared information channel configured for the user equipment, it sending a "UPLINK PHYSICAL CHANNEL CONTROL" message to the user equipment, the message including one or more of the following parameters: $PRX_{HS\text{-}SICH}$, TPC step size and Ack-Nack Power Offset;

Step 102: the user equipment replacing the corresponding parameter which is originally stored according to the power control parameter in the received message, wherein the parameter $PRX_{HS\text{-}SICH}$ is the high speed shared information channel receiving power expected to be received by the user equipment;

TPC step size is the transmission power control step size;

Ack-Nack Power Offset is the transmission power offset.

According to the above method, when the network side updates the HS-SICH transmission power parameter in LCR TDD system, the network side firstly sends a "UPLINK PHYSICAL CHANNEL CONTROL" message to the UE; the message includes the HS-SICH power control parameters: $PPX_{HS\text{-}SICH}$ and/or TPC step size and/or Ack-Nack Power Offset, which are used for updating the HS-SICH power control parameter at the network side; then if the UE receives the HS-SICH power control parameter in the message, the UE will update corresponding parameters stored in it and apply them to the calculation of the HS-SICH transmission power value.

The first embodiment:

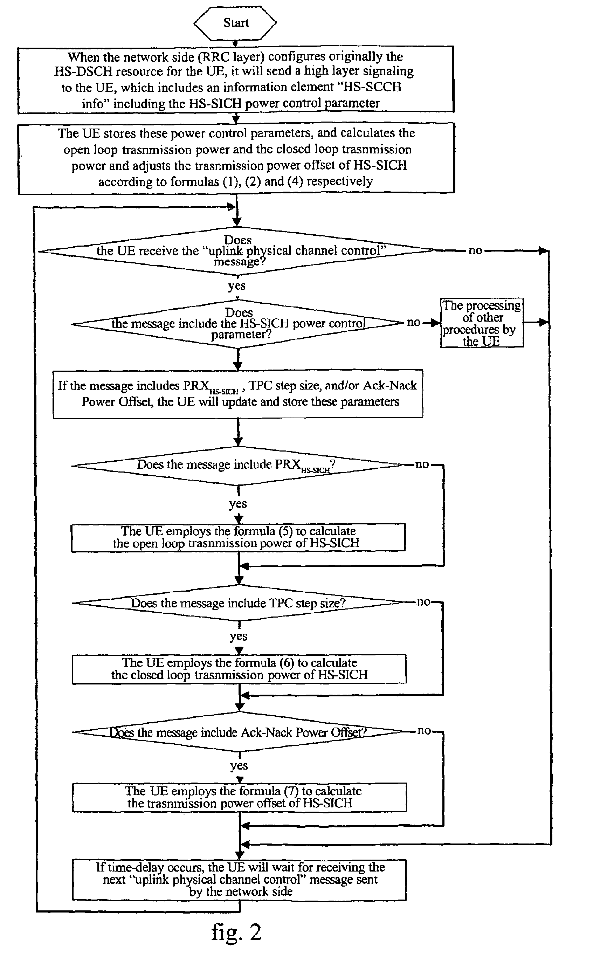

In the LCR TDD system, the method for the network side updating the transmission power parameter of the HS-SICH of the UE is shown in Fig.2.

When the high layer (RRC layer) of RNC of the network side (including RNC and Node B) assigns the HS-DSCH resource for the UE via high layer signaling based on the HS-DSCH resource condition of the network and the traffic demand of the UE, the high layer signaling sent from the network side to the UE includes an information element (IE) "HS-SCCH Info", which includes the HS-SICH power control parameter that the RRC layer initially configured for the UE, for the UE calculating the transmission power of HS-SICH.

Subsequently, in some cases, the RRC layer of the network side needs to adjust the HS-SICH power control parameter configured for the UE so as to make the UE recalculate the transmission power of the HS-SICH. In such cases, the RRC layer will no longer use the high layer signaling which originally configured the HS-DSCH resource, the RRC layer will send another high layer signaling to the UE, i.e. the "UPLINK PHYSICAL CHANNEL CONTROL" message, which includes new HS-SICH power control parameter. The RRC layer may send the "UPLINK PHYSICAL CHANNEL CONTROL" message to the UE based on the quality of the high speed shared information channel or whenever the RRC determines independently to initiate the updating of parameter, such as based on the RRM (radio resource manage) arithmetic employed inside the RRC.

(1) When the network side configures the HS-DSCH resource for the UE, the high layer signaling sent to the UE includes an information element "HS-SCCH Info", which includes HS-SICH power control parameters: $PRX_{HS-SICH}$, TPC step size and Ack-Nack Power Offset;

(2) The UE receives these HS-SICH power control parameters in the "HS-SCCH Info", and applys them respectively to the calculation of the open loop power control of HS-SICH (formula 1), the calculation of the closed loop power control (formula 3) and the power offset adjusted by the physical layer (formula 4);

(3) When the network side determines to update the power control parameter of the HS-SICH based on the quality of the high speed shared channel, or whenever the network side determines to update the HS-SICH power control parameter independently, the network side will send the "UPLINK PHYSICAL CHANNEL CONTROL" message to the UE; the message includes one or more of the following HS-SICH power control parameters: $PRX_{HS-SICH}$ and/or TCP step size and/or Ack-Nack Power Offset.

In other word, when the RRC layer needs to update the open loop power parameter of HS-SICH, the message includes the $PRX_{HS-SICH}$; when the RRC layer needs to update the closed loop power parameter of HS-SICH, the message includes the TPC step size; when the RRC layer needs to update the transmission power offset of HS-SICH, the message includes the Ack-Nack Power Offset; the RRC may update one or more of the power control parameters in the message.

(4) The UE replaces the corresponding parameter which is originally stored with these new HS-SICH power control parameters received;

a) If the updated HS-SICH power control parameters include $PRX_{HS-SICH}$, the UE calculates the initial transmission power of the HS-SICH by using the following formula:

$$P_{HS-SICH} = PRX'_{HS-SICH} + L_{PCCPCH} \qquad \text{(formula 5)}$$

wherein $PRX'_{HS-SICH}$ is the updated parameter from the "UPLINK PHYSICAL CHANNEL CONTROL" message stored by the UE;

b) If the updated HS-SICH power control parameters include TPC step size, the UE calculates the closed loop transmission power of HS-SICH by using the following formula:

$$P_{HS-SICH} = P_{HS-SICH}' + \text{TPC step size'(TPC)} \qquad \text{(formula 6)}$$

wherein TPC step size' is the updated parameter from the "UPLINK PHYSICAL CHANNEL CONTROL" message stored by the UE;

c) If the updated HS-SICH power control parameters include Ack-Nack Power Offset, the physical layer of the UE employs the updated Ack-Nack Power Offset as the transmission power offset of HS-SICH to adjust the final transmission power of HS-SICH:

$$P_{HS\text{-}SICH} = P_{HS\text{-}SICH} + \text{Ack-Nack Power Offset'} \qquad \text{(formula 7)}$$

wherein Ack-Nack Power Offset' is the updated parameter from the "UPLINK PHYSICAL CHANNEL CONTROL" message stored by the UE.

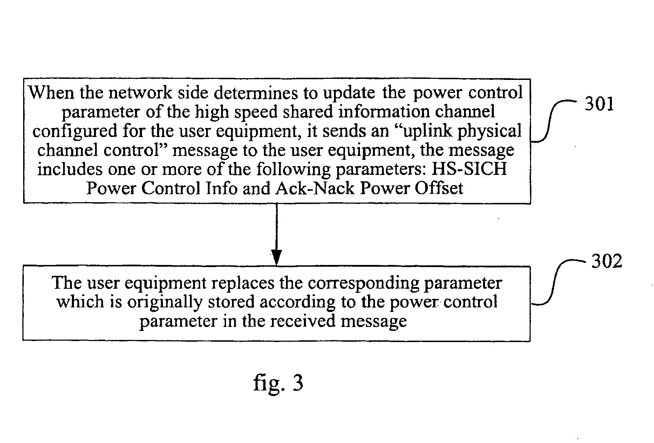

As shown in Fig.3, the method for updating the power control parameter of the high speed shared information channel for a time division duplex system with high chip rate includes the following steps of:

Step 301: when the network side determines to update the power control parameter of the high speed shared information channel configured for the user equipment, it sending a "UPLINK PHYSICAL CHANNEL CONTROL" message to the user equipment, the message including one or more of the following parameters: HS-SICH Power Control Info and Ack-Nack Power Offset;

Step 302: the user equipment replacing the corresponding parameter which is originally stored according to the power control parameter in the received message,

wherein the HS-SICH Power Control Info is the power control information element of the high speed shared information channel;

Ack-Nack Power Offset is the transmission power offset.

According to the above method, when the network side updates the HS-SICH transmission power parameter in the HCR TDD system, the network side will firstly send a "UPLINK PHYSICAL CHANNEL CONTROL" message to the UE; the HS-SICH power control parameters in the message not only include the HS-SICH Power Control Info (included in the protocol), but also include Ack-Nack Power Offset for the network side updating the HS-SICH power control parameter; then if the UE receives the HS-SICH power control parameter in this message, the UE will update the corresponding parameter stored in it and apply it to the calculation of the HS-SICH transmission power value.

The second embodiment:

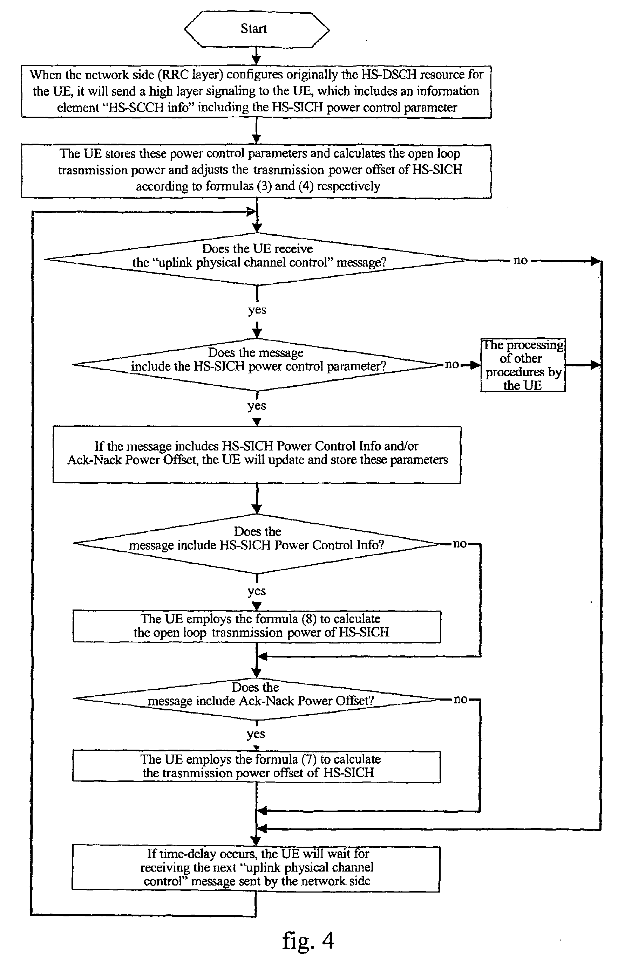

In HCR TDD system, the method for the network side updating the HS-SICH transmission power control parameter is shown in Fig.4.

(1) When the network side configures the HS-DSCH resource for the UE, the high layer signaling sent to the UE includes an information element "HS-SCCH Info", which includes HS-SICH power control parameters: HS-SICH Power Control Info and Ack-Nack Power Offset;

(2) The UE receives these HS-SICH power control parameters in "HS-SCCH Info", and applys them respectively to the calculation of the open loop power control of HS-SICH (formula 2) and the power offset adjusted by the physical layer (formula 4);

(3) When the network side determines to update certain power control parameters of the HS-SICH based on the measurement result of the channel quality of the HS-SICH, or whenever the network side determines to update certain power control parameters of the HS-SICH independently, the network side will send the "UPLINK PHYSICAL CHANNEL CONTROL" message to the UE; the message includes one or more of the following HS-SICH power control parameters: HS-SICH Power Control Info and Ack-Nack Power Offset;

(4) The UE replaces the corresponding parameter which is originally stored with these new HS-SICH power control parameters received;

a) If the updated HS-SICH power control parameters include HS-SICH Power Control Info, the UE will calculate the initial transmission power of the HS-SICH by using the following formula:

$$P_{HS\text{-}SICH} = \alpha L_{PCCPCH} + (1-\alpha)L_0 + I_{BTS} + SIR'_{TARGET} + \text{HS-SICH Constant value'} \quad \text{(formula 8)}$$

wherein both the SIR'$_{TARGET}$ and HS-SICH Constant value' are included in the information element "HS-SICH Power Control Info", and they are the updated parameters from the "UPLINK PHYSICAL CHANNEL CONTROL" message stored by the UE;

b) If the updated HS-SICH power control parameters include Ack-Nack Power Offset, the physical layer of the UE will employ the updated Ack-Nack Power Offset as the transmission power offset of the HS-SICH to adjust the final transmission power of the HS-SICH:

$$P_{HS-SICH}= P_{HS-SICH}+ \text{Ack-Nack Power Offset'} \qquad \text{(same as formula 7)}$$

wherein Ack-Nack Power Offset' is the updated parameter from the "UPLINK PHYSICAL CHANNEL CONTROL" message stored by the UE.

## Industrial Applicability

By using the method provided by the present invention, the network side realizes the timely and accurate update of the power control parameter of HS-SICH in TDD system (including time division duplex system with low chip rate and time division duplex system with high chip rate), so that the user equipment can get the correctly updated power control parameter and update the transmission power timely based on the updated power control parameter.

## Claims

**1.** A method for updating power control parameter of high speed shared information channel comprising the steps of:

a radio resource control layer on a network side sending a "UPLINK PHYSICAL CHANNEL CONTROL" message to a user equipment when the radio resource control layer determines to update the power control parameter of the high speed shared information channel configured for the user equipment, the message including one or more of the following parameters: high speed shared information channel receiving power "PRX$_{HS-SICH}$" expected to be received by the user equipment, transmission power control step size "TPC step size" power control information element of the high speed shared information channel "HS-SICH Power Control Info" and Ack-Nack transmission power offset "Ack-Nack power offset" (101, 301); and

the user equipment replacing the corresponding parameter which is originally stored according to the power control parameter in the received message (102, 302);

wherein, "PRX$_{HS-SICH}$", "TPC step size" and "Ack-Nack power offset" are for a time division duplex system with low chip rate, and "HS-SICH Power Control Info" and "Ack-Nack power offset" are for a time division duplex system with high chip rate.

**2.** The method according to claim 1, wherein when the radio resource control layer determines to update the power control parameter of the high speed shared information channel configured for the user equipment, it is also a time when the radio resource control layer determines to update the power control parameter of the high speed shared information channel based on quality of the high speed sheared channel, or when the radio resource control layer independently determines to update the power control parameter of the high speed shared information channel.

**3.** The method according to claim 1, wherein in the step of the radio resource control layer determines to update the power control parameter of the high speed shared information channel configured for the user equipment,

when the radio resource control layer determines to update open loop power control parameter of the high speed shared information channel, the "UPLINK PHYSICAL CHANNEL CONTROL" message sent to the user equipment should include the parameter "PRX$_{HS-SICH}$"; when the radio resource control layer determines to update closed loop power control parameter of the high speed shared information channel, the "UPLINK PHYSICAL CHANNEL CONTROL" message sent to the user equipment should include the parameter "TPC step size"; and

when the radio resource control layer determines to update the transmission power offset of the high speed shared information channel, the "UPLINK PHYSICAL CHANNEL CONTROL" message sent to the user equipment should include the parameter "Ack-Nack Power Offset".

**4.** The method according to claim 1, wherein in the step of the radio resource control layer determining to update the power control parameter of the high speed shared information channel configured for the user equipment,

when the radio resource control layer determines to update open loop power control parameter of the high speed shared information channel, the "UPLINK PHYSICAL CHANNEL CONTROL" message sent to the user equipment should include the parameter "HS-SICH Power Control Info";

when the radio resource control layer determines to update the transmission power offset of the high speed shared information channel, the "UPLINK PHYSICAL CHANNEL CONTROL" message sent to the user equipment should include the parameter "Ack-Nack Power Offset".

**5.** A method according to any previous claim for updating transmission power of high speed shared information channel of a user equipment using the updated power control parameter of claims 1-4, comprising the user equipment recalculating the transmission power based on the updated power control parameter.

**6.** The method according to claim 5, wherein when the radio resource control layer determines to update open loop power control parameter of the high speed shared information channel, the "UPLINK PHYSICAL CHANNEL CONTROL" message should include $PRX_{HS-SICH}$, the user equipment replaces the corresponding parameter which is originally stored according to the $PRX_{HS-SICH}$ in the received message, the updated parameter is $PRX'_{HS-SICH}$, and the user equipment calculates initial transmission power of the HS-SICH using the following formula:

$$P_{HS-SICH} = PRX'_{HS-SICH} + L_{PCCPCH},$$

wherein, $L_{PCCPCH}$ is measuring compensation value of the user equipment, which is a parameter stored by the user equipment;

when the radio resource control layer determines to update closed loop power control parameter of the high speed shared information channel, the "UPLINK PHYSICAL CHANNEL CONTROL" message should include TPC step size, the user equipment replaces the corresponding parameter which is originally stored according to the TPC step size in the received message, the updated parameter is TPC step size', and the user equipment calculates the closed loop transmission power of the HS-SICH using the following formula:

$$P_{HS-SICH} = P_{HS-SICH}' + TPC \text{ step size'}(TPC),$$

wherein, $P_{HS-SICH}'$ is a power value of the user equipment transmitting the high speed shared information channel last time, TPC is a TPC value carried on High Speed Shared Control Channel received by the user equipment; when TPC is "UP", the power of the user equipment transmitting the high speed shared information channel this time is $P_{HS-SICH} = P_{HS-SICH}' + TPC$ step size; when TPC is "DOWN", the power of the user equipment transmitting the high speed shared information channel this time is $P_{HS-SICH} = P_{HS-SICH}' - TPC$ step size;

when the radio resource control layer determines to update the transmission power offset of the high speed shared information channel, the "UPLINK PHYSICAL CHANNEL CONTROL" message should include Ack-Nack Power Offset, a physical layer of the user equipment employs the updated Ack-Nack Power Offset as the offset of the transmission power of the high speed shared information channel, the updated parameter is Ack-Nack Power Offset', and the transmission power of the high speed shared information channel is adjusted finally by the following formula:

$$P_{HS-SICH} = P_{HS-SICH} + \text{Ack-Nack Power Offset'}.$$

**7.** The method according to claim 5, wherein when the radio resource control layer determines to update open loop power control parameter of the high speed shared information channel, the "UPLINK PHYSICAL CHANNEL CONTROL" message should include HS-SICH Power Control Info, the HS-SICH Power Control Info should include target signal to interference ratio $SIR_{TARGET}$ and HS-SICH Constant value, the user equipment replaces the corresponding parameter which is originally stored according to the $SIR_{TARGET}$ and the HS-SICH Constant value in the received message, the updated parameters are $SIR'_{TARGET}$ and HS-SICH Constant value', and the user equipment calculates initial transmission power of the high speed shared information channel using the following formula:

$$P_{HS-SICH} = \alpha L_{PCCPCH} + (1-\alpha)L_0 + I_{BTS} + SIR'_{TARGET} + \text{HS-SICH Constant value'},$$

wherein, the parameters stored in the user equipment include:

$L_{PCCPCH}$: measuring compensation value of the user equipment;
$L_0$: long-term average value of path loss;
$\alpha$: weight parameter, and the range being 0 to 1;
$L_{BTS}$: interference signal power at a receiver at a base station;

when the radio resource control layer determines to update the transmission power offset of the high speed shared information channel, the "UPLINK PHYSICAL CHANNEL CONTROL" message should include Ack-Nack Power Offset, a physical layer of the user equipment employs the updated Ack-Nack Power Offset as the offset of the transmission power of the high speed shared information channel, the updated parameter is Ack-Nack Power Offset', and the transmission power of the high speed shared information channel is adjusted finally by the following formula:

$$P_{HS-SICH} = P_{HS-SICH} + \text{Ack-Nack power offset'}.$$

## Patentansprüche

1. Verfahren zur Aktualisierung von Leistungssteuerungsparametern eines Hochgeschwindigkeitskanals für verteilte Informationen, umfassend folgende Schritte:

   Senden durch eine Funkressourcen-Steuerungsschicht auf einer Netzwerkseite einer Meldung "PHYSIKALISCHE UPLINKKANALSTEUERUNG" an ein Anwendergerät, wenn die Funkressourcen-Steuerungsschicht festlegt, den Leistungssteuerungsparameter des für das Anwendergerät konfigurierten Hochgeschwindigkeitskanals für verteilte Informationen zu aktualisieren, wobei die Meldung einen oder mehrere der folgenden Parameter enthält: Empfangsleistung des Hochgeschwindigkeitskanals für verteilte Informationen "$PRX_{HS-SICH}$", von der erwartet wird, dass sie durch das Anwendergerät empfangen wird, Größe des Sendeleistungs-Steuerungsschritts "TPC-Schrittgröße", Leistungssteuerungsinformationselement des Hochgeschwindigkeitskanals für verteilte Informationen "HS-SICH-Leistungssteuerungsinfo" und Ack-Nack-Sendeleistungs-Offset "Ack-Nack-Leistungs-Offset" (101, 301); und
   Ersetzen des entsprechenden Parameters, der ursprünglich gespeichert ist, durch das Anwendergerät gemäß dem Leistungssteuerungsparameter in der empfangenen Meldung (102, 302);
   wobei "$PRX_{HS-SICH}$", "TPC-Schrittgröße" und "Ack-Nack-Leistungs-Offset" für ein Time-Division-Duplex-System mit niedriger Chip-Rate gelten und "HS-SICH-Leistungssteuerungsinfo" und "Ack-Nack-Leistungs-Offset" für ein Time-Division-Duplex-System mit hoher Chip-Rate gelten.

2. Verfahren nach Anspruch 1, wobei, wenn die Funkressourcen-Steuerungsschicht festlegt, den Leistungssteuerungsparameter des für das Anwendergerät konfigurierten Hochgeschwindigkeitskanals für verteilte Informationen zu aktualisieren, dies auch eine Zeit ist, zu der die Funkressourcen-Steuerungsschicht festlegt, den Leistungssteuerungsparameter des Hochgeschwindigkeitskanals für verteilte Informationen auf Grundlage der Qualität des geteilten Hochgeschwindigkeitskanals zu aktualisieren, oder zu der die Funkressourcen-Steuerungsschicht unabhängig festlegt, den Leistungssteuerungsparameter des Hochgeschwindigkeitskanals für verteilte Informationen zu aktualisieren.

3. Verfahren nach Anspruch 1, wobei in dem Schritt, in dem die Funkressourcen-Steuerungsschicht festlegt, den Leistungssteuerungsparameter des für das Anwendergerät konfigurierten Hochgeschwindigkeitskanals für verteilte Informationen zu aktualisieren, wenn die Funkressourcen-Steuerungsschicht festlegt, den Leistungssteuerungsparameter des offenen Regelkreises des Hochgeschwindigkeitskanals für verteilte Informationen zu aktualisieren, die zum Anwendergerät gesendete Meldung "PHYSIKALISCHE UPLINKKANALSTEUERUNG" den Parameter "$PRX_{HS-SICH}$" enthalten sollte; wenn die Funkressourcen-Steuerungsschicht festlegt, den Leistungssteuerungsparameter des geschlossenen Regelkreises des Hochgeschwindigkeitskanals für verteilte Informationen zu aktualisieren, die zum Anwendergerät gesendete Meldung "PHYSIKALISCHE UPLINKKANALSTEUERUNG" den Parameter "TPC-Schrittgröße" enthalten sollte; und
   wenn die Funkressourcen-Steuerungsschicht festlegt, den Sendeleistungs-Offset des Hochgeschwindigkeitskanals für verteilte Informationen zu aktualisieren, die zum Anwendergerät gesendete Meldung "PHYSIKALISCHE UPLINKKANALSTEUERUNG" den Parameter "Ack-Nack-Leistungs-Offset" enthalten sollte.

4. Verfahren nach Anspruch 1, wobei in dem Schritt, in dem die Funkressourcen-Steuerungsschicht festlegt, den Leistungssteuerungsparameter des für das Anwendergerät konfigurierten Hochgeschwindigkeitskanals für verteilte Informationen zu aktualisieren, wenn die Funkressourcen-Steuerungsschicht festlegt, den Leistungssteuerungsparameter des offenen Regelkreises des Hochgeschwindigkeitskanals für verteilte Informationen zu aktualisieren, die zum Anwendergerät gesendete Meldung "PHYSIKALISCHE UPLINKKANALSTEUERUNG" den Parameter "HS-SICH-Leistungssteuerungsinfo" enthalten sollte;

wenn die Funkressourcen-Steuerungsschicht festlegt, den Sendeleistungs-Offset des Hochgeschwindigkeitskanals für verteilte Informationen zu aktualisieren, die zum Anwendergerät gesendete Meldung "PHYSIKALISCHE UPLINKKANALSTEUERUNG" den Parameter "Ack-Nack-Leistungs-Offset" enthalten sollte.

5. Verfahren nach einem beliebigen vorhergehenden Anspruch zur Aktualisierung der Sendeleistung des Hochgeschwindigkeitskanals für verteilte Informationen eines Anwendergeräts unter Verwendung des aktualisierten Leistungssteuerungsparameters der Ansprüche 1 - 4, umfassend das Neuberechnen der Sendeleistung durch das Anwendergerät auf Grundlage des aktualisierten Leistungssteuerungsparameters.

6. Verfahren nach Anspruch 5, wobei, wenn die Funkressourcen-Steuerungsschicht festlegt, den Leistungssteuerungsparameter des offenen Regelkreises des Hochgeschwindigkeitskanals für verteilte Informationen zu aktualisieren, die Meldung "PHYSIKALISCHE UPLINKKANALSTEUERUNG" $PRX_{HS-SICH}$ enthalten sollte, das Anwendergerät den entsprechenden Parameter, der ursprünglich gespeichert ist, gemäß dem $PRX_{HS-SICH}$ in der empfangenen Meldung ersetzt, der aktualisierte Parameter $PRX'_{HS-SICH}$ ist und das Anwendergerät die anfängliche Sendeleistung des HS-SICH unter Verwendung der folgenden Formel berechnet:

$$P_{HS-SICH} = PRX'_{HS-SICH} + L_{PCCPCH},$$

wobei $L_{PCCPCH}$ Messkompensationswert des Anwendergeräts ist, der ein durch das Anwendergerät gespeicherter Parameter ist;

wenn die Funkressourcen-Steuerungsschicht festlegt, den Leistungssteuerungsparameter des geschlossenen Regelkreises des Hochgeschwindigkeitskanals für verteilte Informationen zu aktualisieren, die Meldung "PHYSIKALISCHE UPLINKKANALSTEUERUNG" TPC-Schrittgröße enthalten sollte, das Anwendergerät den entsprechenden Parameter, der ursprünglich gespeichert ist, gemäß der TPC-Schrittgröße in der empfangenen Meldung ersetzt, der aktualisierte Parameter TPC-Schrittgröße' ist und das Anwendergerät die Sendeleistung des geschlossenen Regelkreises des HS-SICH unter Verwendung der folgenden Formel berechnet:

$$P_{HS-SICH} = P_{HS-SICH}' + TPC\text{-}Schrittgröße'(TPC),$$

wobei $P_{HS-SICH}'$ ein Leistungswert des Anwendergeräts beim Senden des Hochgeschwindigkeitskanals für verteilte Informationen beim letzten Mal ist, TPC ein auf dem Hochgeschwindigkeitskanal für verteilte Steuerung getragener TPC-Wert ist, der durch das Anwendergerät empfangen ist; wenn TPC "AUFWÄRTS" ist, die Leistung des den Hochgeschwindigkeitskanal für verteilte Informationen sendenden Anwendergeräts dieses Mal $P_{HS-SICH} = P_{HS-SICH}' + TPC\text{-}Schrittgröße$ beträgt; wenn TPC "ABWÄRTS" ist, die Leistung des den Hochgeschwindigkeitskanal für verteilte Informationen sendenden Anwendergeräts dieses Mal $P_{HS-SICH} = P_{HS-SICH}' - TPC\text{-}Schrittgröße$ beträgt; wenn die Funkressourcen-Steuerungsschicht festlegt, den Sendeleistungs-Offset des Hochgeschwindigkeitskanals für verteilte Informationen zu aktualisieren, die Meldung "PHYSIKALISCHE UPLINKKANALSTEUERUNG" Ack-Nack-Leistungs-Offset enthalten sollte, eine physikalische Schicht des Anwendergeräts den aktualisierten Ack-Nack-Leistungs-Offset als den Offset der Sendeleistung des Hochgeschwindigkeitskanals für verteilte Informationen verwendet, der aktualisierte Parameter Ack-Nack-Leistungs-Offset' ist und die Sendeleistung des Hochgeschwindigkeitskanals für verteilte Informationen schließlich nach der folgenden Formel eingestellt wird:

$$P_{HS-SICH} = P_{HS-SICH} + Ack\text{-}Nack\text{-}Leistungs\text{-}Offset'.$$

7. Verfahren nach Anspruch 5, wobei, wenn die Funkressourcen-Steuerungsschicht festlegt, den Leistungssteuerungsparameter des offenen Regelkreises des Hochgeschwindigkeitskanals für verteilte Informationen zu aktualisieren, die Meldung "PHYSIKALISCHE UPLINKKANALSTEUERUNG" HS-SICH-Leistungssteuerungsinfo enthalten sollte, die HS-SICH-Leistungssteuerungsinfo Ziel-Störabstand $SIR_{TARGET}$ und HS-SICH-Konstantwert enthalten sollte, das Anwendergerät den entsprechenden Parameter, der ursprünglich gespeichert ist, gemäß dem $SIR_{TARGET}$

und dem HS-SICH-Konstantwert in der empfangenen Meldung ersetzt, die aktualisierten Parameter $SIR'_{TAR\text{-}GET}$ und HS-SICH-Konstantwert' sind und das Anwendergerät die anfängliche Sendeleistung des Hochgeschwindigkeitskanals für verteilte Informationen unter Verwendung der folgenden Formel berechnet:

$$P_{HS\text{-}SICH} = \alpha L_{PCCPCH} + (1-\alpha)L_0 + I_{BTS} + SIR'_{TARGET} + HS\text{-}SICH\text{-}Konstantwert',$$

wobei die im Anwendergerät gespeicherten Parameter enthalten:

$L_{PCCPCH}$: Messkompensationswert des Anwendergeräts;
$L_0$: Langzeitmittelwert des Pfadverlusts;
$\alpha$: Gewichtungsparameter, Bereich 0 bis 1;
$L_{BTS}$: Störsignalleistung bei einem Empfänger an einer Basisstation;

wenn die Funkressourcen-Steuerungsschicht festlegt, den Sendeleistungs-Offset des Hochgeschwindigkeitskanals für verteilte Informationen zu aktualisieren, die Meldung "PHYSIKALISCHE UPLINKKANALSTEUERUNG" Ack-Nack-Leistungs-Offset enthalten sollte, eine physikalische Schicht des Anwendergeräts den aktualisierten Ack-Nack-Leistungs-Offset als den Offset der Sendeleistung des Hochgeschwindigkeitskanals für verteilte Informationen verwendet, der aktualisierte Parameter Ack-Nack-Leistungs-Offset' ist und die Sendeleistung des Hochgeschwindigkeitskanals für verteilte Informationen schließlich nach der folgenden Formel eingestellt wird:

$$P_{HS\text{-}SICH} = P_{HS\text{-}SICH} + \text{Ack-Nack-Leistungs-Offset'}.$$

## Revendications

1. Méthode pour mettre à jour un paramètre de commande de puissance d'un canal d'informations partagé à haut débit, comprenant les étapes suivantes :

   une couche de contrôle de ressource radio sur un côté réseau envoie un message « COMMANDE DE CANAL PHYSIQUE DE LIAISON MONTANTE » à un équipement utilisateur lorsque la couche de contrôle de ressource radio détermine de mettre à jour le paramètre de commande de puissance du canal d'information partagé à haut débit configuré pour l'équipement utilisateur, le message contenant un ou plusieurs des paramètres suivants : la puissance de réception du canal d'informations partagé à haut débit « $PRX_{HS\text{-}SICH}$ » devant être reçue par l'équipement utilisateur, le pas de progression de commande de puissance de transmission « TPC step size », un élément d'information de commande de puissance du canal d'informations partagé à haut débit « HS-SICH Power Control Info » et un décalage de puissance de transmission Ack-Nack « Ack-Nack power offset » (101, 301) ; et
   l'équipement utilisateur remplace le paramètre correspondant initialement stocké selon le paramètre de commande de puissance dans le message reçu (102, 302) ;
   sachant que « $PRX_{HS\text{-}SICH}$ », « TPC step size » et « Ack-Nack power offset » sont destinés à un système duplex à répartition temporelle à faible débit d'élément et « HS-SICH Power Control Info » et « Ack-Nack power offset » sont destinés à un système duplex à répartition temporelle à haut débit d'éléments.

2. Méthode selon la revendication 1, dans laquelle lorsque la couche de contrôle de ressource radio détermine de mettre à jour le paramètre de commande de puissance du canal d'informations partagé à haut débit configuré pour l'équipement utilisateur, c'est également un moment auquel la couche de contrôle de ressource radio détermine de mettre à jour le paramètre de commande de puissance du canal d'informations partagé à haut débit sur la base de la qualité du canal partagé à haut débit, ou lorsque la couche de contrôle de ressource radio détermine indépendamment de mettre à jour le paramètre de commande de puissance du canal d'informations partagé à haut débit.

3. Méthode selon la revendication 1, dans laquelle dans l'étape où la couche de contrôle de ressource radio détermine de mettre à jour le paramètre de commande de puissance du canal d'informations partagé à haut débit configuré pour l'équipement utilisateur,
   lorsque la couche de contrôle de ressource radio détermine de mettre à jour un paramètre de commande de puissance à boucle ouverte du canal d'informations partagé à haut débit, le message « COMMANDE DE CANAL PHYSIQUE DE LIAISON MONTANTE » envoyé à l'équipement utilisateur devrait contenir le paramètre « $PRX_{HS\text{-}SICH}$ » ;

lorsque la couche de contrôle de ressource radio détermine de mettre à jour un paramètre de commande de puissance à boucle fermée du canal d'informations partagé à haut débit, le message « COMMANDE DE CANAL PHYSIQUE DE LIAISON MONTANTE » envoyé à l'équipement utilisateur devrait contenir le paramètre « TPC step size » ; et lorsque la couche de contrôle de ressource radio détermine de mettre à jour le décalage de puissance de transmission du canal d'informations partagé à haut débit, le message « COMMANDE DE CANAL PHYSIQUE DE LIAISON MONTANTE » envoyé à l'équipement utilisateur devrait contenir le paramètre « Ack-Nack Power Offset ».

**4.** Méthode selon la revendication 1, dans laquelle dans l'étape où la couche de contrôle de ressource radio détermine de mettre à jour le paramètre de commande de puissance du canal d'informations partagé à haut débit configuré pour l'équipement utilisateur,

lorsque la couche de contrôle de ressource radio détermine de mettre à jour un paramètre de commande de puissance à boucle ouverte du canal d'informations partagé à haut débit, le message « COMMANDE DE CANAL PHYSIQUE DE LIAISON MONTANTE » envoyé à l'équipement utilisateur devrait contenir le paramètre « HS-SICH Power Control Info » ;

lorsque la couche de contrôle de ressource radio détermine de mettre à jour le décalage de puissance de transmission du canal d'informations partagé à haut débit, le message « COMMANDE DE CANAL PHYSIQUE DE LIAISON MONTANTE » envoyé à l'équipement utilisateur devrait contenir le paramètre « Ack-Nack Power Offset ».

**5.** Méthode selon l'une quelconque des revendications précédentes pour mettre à jour la puissance de transmission d'un canal d'informations partagé à haut débit d'un équipement utilisateur utilisant le paramètre de commande de puissance mis à jour selon les revendications 1-4, comprenant le re-calcul, par l'équipement utilisateur, de la puissance de transmission sur la base du paramètre de commande de puissance mis à jour.

**6.** Méthode selon la revendication 5, dans laquelle lorsque la couche de contrôle de ressource radio détermine de mettre à jour un paramètre de commande de puissance à boucle ouverte du canal d'informations partagé à haut débit, le message « COMMANDE DE CANAL PHYSIQUE DE LIAISON MONTANTE » devrait contenir $PRX_{HS\text{-}SICH}$, l'équipement utilisateur remplace le paramètre correspondant initialement stocké selon le $PRX_{HS\text{-}SICH}$ dans le message reçu, le paramètre mis à jour est $PRX'_{HS\text{-}SICH}$ et l'équipement utilisateur calcule la puissance de transmission initiale du HS-SICH sur la base de la formule :

$$P_{HS\text{-}SICH} = PRX'_{HS\text{-}SICH} + L_{PCCPCH},$$

dans laquelle $L_{PCCPCH}$ est une valeur de compensation de mesure de l'équipement utilisateur, qui est un paramètre stocké par l'équipement utilisateur ;

lorsque la couche de contrôle de ressource radio détermine de mettre à jour un paramètre de commande de puissance à boucle fermée du canal d'informations partagé à haut débit, le message « COMMANDE DE CANAL PHYSIQUE DE LIAISON MONTANTE » devrait contenir le pas de progression TPC, l'équipement utilisateur remplace le paramètre correspondant initialement stocké selon le pas de progression TPC dans le message reçu, le paramètre mis à jour est TPC step size' et l'équipement utilisateur calcule la puissance de transmission en boucle fermée du HS-SICH sur la base de la formule :

$$P_{HS\text{-}SICH} = P_{HS\text{-}SICH}' + TPC\ step\ size'(TPC),$$

sachant que $P_{HS\text{-}SICH}'$ est une valeur de puissance de l'équipement utilisateur ayant émis la dernière fois le canal d'informations partagé à haut débit, TPC est une valeur TPC transportée dans un canal de commande partagé à haut débit reçue par l'équipement utilisateur ; lorsque TPC est « UP », la puissance de l'équipement utilisateur émettant cette fois le canal d'informations partagé à haut débit est $P_{HS\text{-}SICH} - P_{HS\text{-}SICH}' + TPC\ step\ size$ ; lorsque TPC est « DOWN », la puissance de l'équipement utilisateur émettant cette fois le canal d'informations partagé à haut débit est $P_{HS\text{-}SICH} = P_{HS\text{-}SICH}' - TPC\ step\ size$ ;

lorsque la couche de contrôle de ressource radio détermine de mettre à jour le décalage de puissance de transmission du canal d'informations partagé à haut débit, le message « COMMANDE DE CANAL PHYSIQUE DE LIAISON MONTANTE » devrait contenir le décalage de puissance Ack-Nack, une couche physique de l'équipement utilisateur utilise le décalage de puissance Ack-Nack mis à jour comme le décalage de la puissance de transmission du canal d'informations partagé à haut débit, le paramètre mis à jour est Ack-Nack Power Offset' et la puissance de transmission du canal d'informations partagé à haut débit est finalement réglée selon la formule suivante :

$$P_{HS-SICH} = P_{HS-SICH} + \text{Ack-Nack Power Offset'}.$$

7. Méthode selon la revendication 5, dans laquelle lorsque la couche de contrôle de ressource radio détermine de mettre à jour un paramètre de commande de puissance à boucle ouverte du canal d'informations partagé à haut débit, le message « COMMANDE DE CANAL PHYSIQUE DE LIAISON MONTANTE » devrait contenir HS-SICH Power Control Info, le HS-SICH Power Control Info devrait contenir le rapport signal/brouillage cible $SIR_{TARGET}$ et la valeur constante HS-SICH Constant value, l'équipement utilisateur remplace le paramètre correspondant qui est initialement stocké selon le $SIR_{TARGET}$ et la valeur constante HS-SICH Constant value dans le message reçu, les paramètres mis à jour sont $SIR'_{TARCET}$ et HS-SICH Constant value' et l'équipement utilisateur calcule la puissance de transmission initiale du canal d'informations partagé à haut débit sur la base de la formule :

$$P_{HS-SICH} = \alpha L_{PCCPCH} + (1-\alpha)L_0 + I_{BTS} + SIR'_{TARGET} + \text{HS-SICH Constant value'},$$

sachant que les paramètres stockés dans l'équipement utilisateur comprennent :

$L_{PCCPCH}$ : valeur de compensation de mesure de l'équipement utilisateur ;
$L_0$ : valeur moyenne de long terme de l'affaiblissement sur le trajet ;
$\alpha$ : paramètre de pondération et l'étendue étant de 0 à 1 ;
$L_{BTS}$ : puissance du signal perturbateur à un récepteur à une station de base ;

lorsque la couche de contrôle de ressource radio détermine de mettre à jour le décalage de puissance de transmission du canal d'informations partagé à haut débit, le message « COMMANDE DE CANAL PHYSIQUE DE LIAISON MONTANTE » devrait contenir le décalage de puissance Ack-Nack, une couche physique de l'équipement utilisateur utilise le décalage de puissance Ack-Nack mis à jour comme le décalage de la puissance de transmission du canal d'informations partagé à haut débit, le paramètre mis à jour est Ack-Nack Power Offset' et la puissance de transmission du canal d'informations partagé à haut débit est finalement réglée selon la formule suivante :

$$P_{HS-SICH} = P_{HS-SICH} + \text{Ack-Nack power offset'}.$$

When the network side determines to update the power control parameter of the high speed shared information channel configured for the user equipment, it sends an "uplink physical channel control" message to the user equipment, the message includes one or more of the following parameters: $PRX_{HS\text{-}SICH}$, TPC step size and Ack-Nack Power Offset — 101

The user equipment replaces the corresponding parameter which is originally stored according to the power control parameter in the received message — 102

fig. 1

```
                          ⟨ Start ⟩

┌─────────────────────────────────────────────────────────┐
│  When the network side (RRC layer) configures originally the │
│  HS-DSCH resource for the UE, it will send a high layer signaling │
│  to the UE, which includes an information element "HS-SCCH │
│  info" including the HS-SICH power control parameter │
└─────────────────────────────────────────────────────────┘
                              │
┌─────────────────────────────────────────────────────────┐
│  The UE stores these power control parameters, and calculates the │
│  open loop trasnmission power and the closed loop trasnmission │
│  power and adjusts the trasnmission power offset of HS-SICH │
│  according to formulas (1), (2) and (4) respectively │
└─────────────────────────────────────────────────────────┘
                              │
                  Does
       the UE receive the "uplink physical channel control"  ─── no ───▶
                  message?
                              │ yes
                  Does
       the message include the HS-SICH power control  ─── no ──▶  ┌──────────────┐
                  parameter?                                       │ The processing│
                              │ yes                                │   of other   │
┌─────────────────────────────────────────────────────────┐       │ procedures by│
│  If the message includes PRX_HS-SICH , TPC step size, and/or Ack-Nack │   the UE    │
│  Power Offset, the UE will update and store these parameters │  └──────────────┘
└─────────────────────────────────────────────────────────┘
                              │
         Does the message include PRX_HS-SICH ?  ─── no ─┐
                              │ yes                       │
┌─────────────────────────────────────────┐              │
│  The UE employs the formula (5) to calculate │          │
│  the open loop trasnmission power of HS-SICH │          │
└─────────────────────────────────────────┘              │
                              │                           │
         Does the message include TPC step size?  ─── no ─┤
                              │ yes                       │
┌─────────────────────────────────────────┐              │
│  The UE employs the formula (6) to calculate │          │
│  the closed loop trasnmission power of HS-SICH │        │
└─────────────────────────────────────────┘              │
                              │                           │
         Does the message include Ack-Nack Power Offset?  ─ no ─┤
                              │ yes                       │
┌─────────────────────────────────────────┐              │
│  The UE employs the formula (7) to calculate │          │
│  the trasnmission power offset of HS-SICH │            │
└─────────────────────────────────────────┘              │
                              │                           │
┌─────────────────────────────────────────────────────────┐
│  If time-delay occurs, the UE will wait for receiving the │
│  next "uplink physical channel control" message sent │
│  by the network side │
└─────────────────────────────────────────────────────────┘
```

fig. 2

When the network side determines to update the power control parameter of the high speed shared information channel configured for the user equipment, it sends an "uplink physical channel control" message to the user equipment, the message includes one or more of the following parameters: HS-SICH Power Control Info and Ack-Nack Power Offset

301

The user equipment replaces the corresponding parameter which is originally stored according to the power control parameter in the received message

302

fig. 3

fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03088695 A1